# EUROPÄISCHE PATENTSCHRIFT

(11) **EP 1 376 055 B1**
(45) Veröffentlichungstag und Bekanntmachung des Hinweises auf die Patenterteilung: **09.11.2005**
(21) Anmeldenummer: 03013919.0
(22) Anmeldetag: 20.06.2003
(51) Int. Cl.: G01C 15/00, H01S 3/02

(54) **Baulasergerät**
Construction laser apparatus
Appareil laser pour la construction

(30) Priorität: 25.06.2002 DE 20209856 U
(43) Veröffentlichungstag der Anmeldung: 02.01.2004
(73) Patentinhaber: Stabila Messgeräte Gustav Ullrich GmbH, 76855 Annweiler (DE)
(72) Erfinder: Kallabis, Gabriel, Dipl.-Ing. (FH), 76848 Spirkelbach (DE)
(74) Vertreter: Stoffregen, Hans-Herbert

(56) Entgegenhaltungen:
- DE-U- 20 021 784
- US-A- 4 379 203
- US-A- 6 128 326

## Beschreibung

Die Erfindung bezieht sich auf Lasergerät wie Baulasergerät mit innerhalb eines Gehäuses angeordneter Lichtquelle.

Um an Bauwerken, z.B. auf Decken oder Wänden, horizontale oder vertikale Linien oder in Räumen entsprechend verlaufende Ebenen genau festzulegen, können Baulasergeräte - auch nur Baulaser genannt - benutzt werden. Entsprechende Baulaser weisen in einem Gehäuse angeordnete Laser auf, um Licht zum Erzeugen von Linien oder Punkten zu emittieren. Dabei kann gegebenenfalls der Laserstrahl z.B. mittels eines Prismas rotierend abgestrahlt werden.

Häufig ist es erforderlich, das von dem Laser abgestrahlte Licht auf ein bestimmtes Maß zu bringen, um z.B. vorhandene Meterriss-Markierungen zu übertragen oder ein festes Abstandsmaß zur einfachen Handhabung zu erzielen. Zur Höhenverstellung kann dabei das Gehäuse des Lasers auf einer Kurbelsäule eines Stativs angeordnet werden. Kurbelsäulen haben den Nachteil, dass diese relativ teuer sind. Außerdem ergibt sich der Nachteil, dass das Gehäuse nur in vertikaler Richtung und nicht horizontal verstellt werden kann. Ist ein horizontales Verschieben erforderlich, so muss das Gehäuse zusammen mit dem Stativ verstellt werden.

Insbesondere bei einem Einsatz auf Baustellen ist festzustellen, dass durch Unachtsamkeit ein Lasergerät beschädigt wie umfallen kann, auch dann, wenn das Lasergehäuse aus Metall besteht.

Aus dem DE 299 14 299 UI ist ein Laser-Nivelliergerät bekannt. Das Gerät weist ein Grundgehäuse auf, das auf drei um 90° zueinander versetzten Koordinatenrichtungen ausrichtbar ist.

Ein tragbares Messgerät zum Ausrichten eines Gleises nach der CH 688 902 umfasst ein Gehäuse, das von einem stabförmigen Vertikalträger ausgeht, um zur Horizontalen ausgerichtet zu werden.

Ein Nivelliersystem nach der DE 197 57 957 A1 ist auf einem Drehtisch angeordnet, um die Positioniergenauigkeit zu verbessern.

Der vorliegenden Erfindung liegt das Problem zugrunde, ein Lasergerät der eingangs genannten Art so weiterzubilden, dass einerseits ein erhöhter Geräteschutz gegeben ist und andererseits die Möglichkeit gegeben ist, mit konstruktiv einfachen Maßnahmen das Gehäuse und somit die Laserebene im gewünschten Umfang zu verstellen.

Erfindungsgemäß wird das Problem im Wesentlichen dadurch gelöst, dass das Gehäuse des Lasergerätes von einer Aufnahme zumindest teilweise umgeben ist, entlang der das Gehäuse des Lasers verstellbar angeordnet ist.

Erfindungsgemäß wird das den Laser, also die Lichtquelle umgebende Gehäuse wiederum von einem Art zweiten Gehäuse oder Gestell als die Aufnahme umgeben, wodurch ein erhöhter Schutz gegeben ist. Gleichzeitig bietet die Aufnahme die Möglichkeit, dass das Gehäuse in dessen Längsrichtung verstellt wird, so dass in Abhängigkeit von der Position der Aufnahme in Bezug z.B. auf ein Stativ ein vertikales oder horizontales Verstellen des Gehäuses möglich ist, ohne dass es einer Veränderung des Stativs selbst bedarf. Auch ist eine Kurbelsäule nicht erforderlich.

Die Aufnahme kann zwei Befestigungen wie Anschlussgewinde für ein Stativ aufweisen, deren Längsachsen senkrecht zueinander verlaufen. Dabei ist insbesondere vorgesehen, dass die Aufnahme eine Grundplatte umfaßt, von der bzw. einem Fortsatz dieser jeweils eine Befestigung wie das Anschlussgewinde ausgehen.

In Weiterbildungen der Erfindung ist vorgesehen, dass entlang der Aufnahme eine plattenförmige Halterung verschiebbar angeordnet ist, in der das Gehäuse des Lasergerätes insbesondere schwenkbar gelagert ist.

Hierzu kann das Gehäuse mit einem bodenseitig zumindest teilweise kugelabschnitt- bzw. kalottenförmig ausgebildeten Abschnitt in einer angepaßten Aussparung oder Aufnahme der Halterung eingreifen.

Insbesondere besteht die Halterung aus einer hohlzylinderförmigen Schale als äußerer Abschnitt und einem das Gehäuse aufnehmenden Einsatz als innerer Abschnitt, der in Richtung des Gehäuses sich erstreckende Vorsprünge zum Eingreifen in eine vorzugsweise umlaufende Vertiefung wie Nut des kugelabschnitt- bzw. kalottenförmigen Abschnitts des Gehäuses aufweist, um ein Drehen des Gehäuses um seine Längsachse zu ermöglichen, ohne dass die Gefahr eines Kippens erwächst.

Dabei können die Vorsprünge von sich entlang Längsachsrichtung der Aufnahme erstrekkenden streifenförmigen Abschnitten des Einsatzes abragen. Hierdurch ergibt sich eine hinreichende Flexibilität, die es ermöglicht, dass das Gehäuse gegebenenfalls im gewünschten Umfang gekippt werden kann, wodurch die Vorsprünge in Ausgriff mit der insbesondere umlaufenden Nut des Gehäuses gelangen. Die streifenförmigen Abschnitte sind dabei insbesondere Ausschnitte des Einsatzes.

Bevorzugterweise umfaßt die Aufnahme von der Grundplatte ausgehende Stäbe oder zumindest einen Bügel, wobei die Stäbe bzw. der zumindest eine Bügel ein Gestell bilden, das das Gehäuse des Lasergerätes schützt.

Bei der Verwendung von einem Bügel - bevorzugterweise werden zwei Bügel benutzt - dient dieser bzw. dienen diese als Handgriff.

Unabhängig hiervon weist jeder Bügel eine U-förmige Geometrie mit von der Grundplatte ausgehenden Seitenschenkeln und einem einem Kreisbogen folgenden Querschenkel auf. Dabei kann zumindest von dem Querschenkel ein Dämpfungselement wie Gummielement ausgehen bzw. diesen umgeben, wodurch eine Dämpfung bei schlagartigen Einwirkungen wie Herabfallen des Lasergerätes erfolgt.

Die das Gehäuse aufnehmende Halterung ist entlang der Stäbe bzw. der Längsschenkel geführt verschiebbar und gegenüber diesen fixierbar.

Sofern von der Grundplatte zwei Bügel ausgehen, ist vorgesehen, dass ein Längsschenkel des einen Bügels unmittelbar benachbart zu einem Längsschenkel des anderen Bügels verläuft. Die benachbarten, ein Schenkelpaar bildenden Längsschenkel sowie die weiteren Längsschenkel verlaufen dabei entlang Kanten einer Dreikantsäule, insbesondere eines gleichschenkeligen Prismas.

Die Halterung für das Gehäuse ist von den Längsschenkeln bzw. dem Schenkelpaar durchsetzt und gegenüber diesen mittels eines Feststellelementes wie Schraube fixierbar.

Von der Grundplatte selbst können Standfüße ausgehen. Ferner kann die Grundplatte bereichsweise von Dämpfungs- wie Gummielementen insbesondere im Bereich der Standfüße umgeben sein, um eine Stoßdämpfung zu erzielen.

Nach einem alternativen Vorschlag ist die Aufnahme ein das Gehäuse des Lasergerätes teilweise umgebendes, eine Geometrie eines U-Profils aufweisendes Element wie Aluminiumprofilelement. Anstelle einer U-Geometrie kann auch die eines umfangsseitig offenen Hohlzylinderabschnitts verwendet werden.

Das Profilelement sollte ein in Längsrichtung verlaufendes Langloch aufweisen, das von einem Feststellelement wie Schraube durchsetzt ist, über die das Gehäuse fixierbar ist. Des Weiteren können von Innenwandungen des Elementes Führungen für das Gehäuse ausgehen, die z.B. stegförmig ausgebildet sind und in entsprechend angepaßte Aussparungen des Gehäuses eingreifen oder umgekehrt.

Unabhängig davon, ob die Aufnahme als Gestell oder teilweise geschlossenes Profilelement ausgebildet ist, sollte diese zumindest bereichsweise koaxial oder in etwa koaxial das Gehäuse des Lasergerätes umgeben, um einen hinreichenden Schutz zu bieten.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine perspektivische Darstellung eines Lasergerätes,
- Fig. 2: das Lasergerät gemäß Fig. 1 mit Gehäuse in angehobener Stellung,
- Fig. 3: ein Detail des Lasergerätes nach den Fig. 1 und 2,
- Fig. 4: eine Variante des Lasergerätes nach den Fig. 1 bis 3 und
- Fig. 5: ein zweites Ausführungsbeispiel eines Lasergerätes.

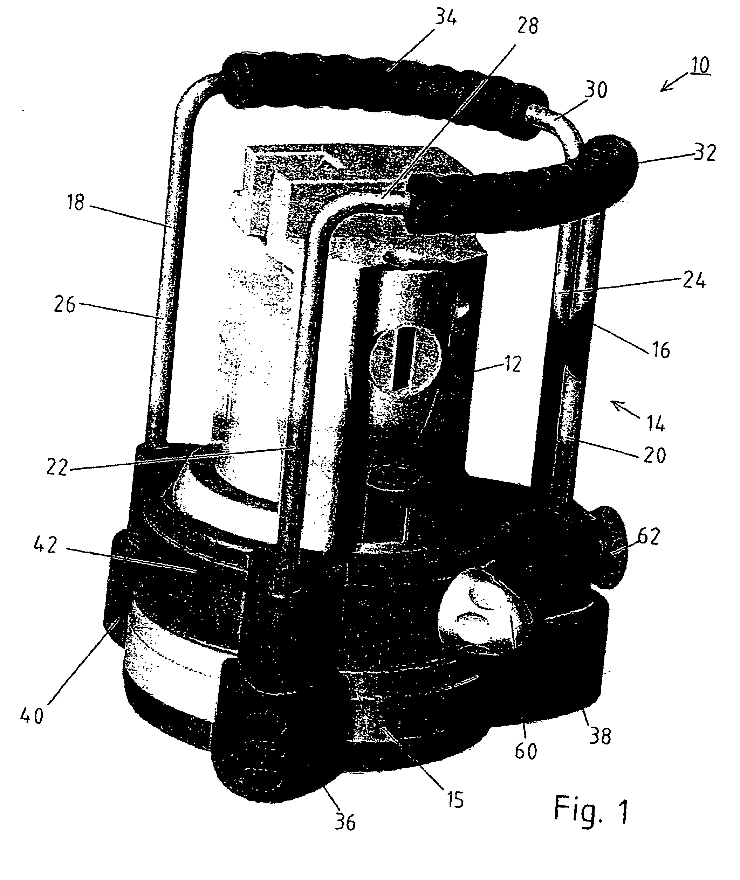

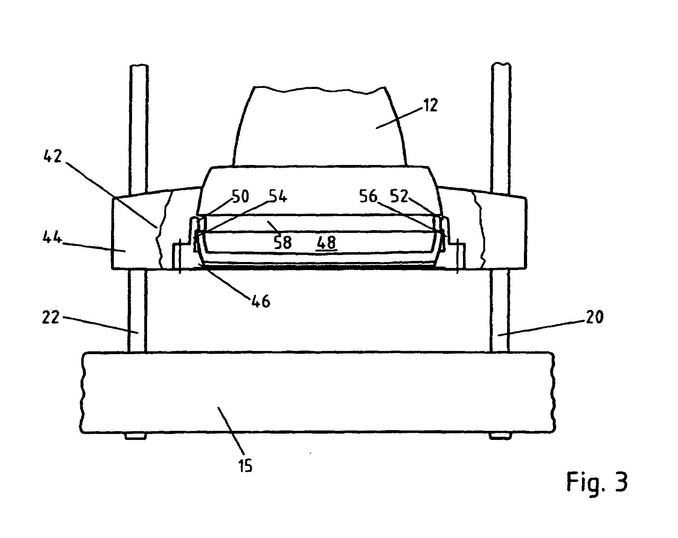

Den Fig. ist ein Lasergerät 10 in Form eines Baulasergerätes - vereinfacht Baulaser genannt - zu entnehmen, das ein Gehäuse 12 aufweist, in dem der Licht emittierende Laser angeordnet ist. Um das Gehäuse 12 zu schützen, wird dieses nach dem Ausführungsbeispiel der Fig. 1 bis 4 von einem als Aufnahme 14 bezeichneten Gestell umgeben, so dass z. B. beim Umfallen des Baulasers 10 das Gehäuse 12 geschützt ist.

Die Aufnahme 14 besteht aus einer Grundplatte 15 mit von dieser ausgehenden U-förmigen Bügeln 16, 18. Dabei besteht jeder Bügel 16, 18 aus zwei Längsschenkeln 20, 22 bzw. 24, 26 sowie einem einem Kreisbogen folgenden Querschenkel 28, 30, die im Ausführungsbeispiel von stoßabsorbierenden Elementen wie Gummielementen 32, 34 umgeben sind. Diese sind ihrerseits strukturiert und können somit die Funktion von Handgriffen ausüben.

Von der Bodenplatte 15, die z.B. aus Kunststoff besteht oder ein Druckgussteil ist, gehen Standfüße aus, die ihrerseits ebenfalls von stoßabsorbierenden Elementen wie Gummielementen 36, 38, 40 umgeben sind. Mit den Standfüßen sind des Weiteren die Längsschenkel 20, 22, 24, 26 der Bügel 16, 18 verbunden.

Ferner geht von der Grundplatte 15, und zwar von deren Zentrum eine Befestigung wie ein Anschlussgewinde 41 für ein Stativ aus. Hierzu kann die Grundplatte 15 selbst einen Boden aufweisen oder aber ein die Grundplatte 15 bildender Rahmen in Form eines Hohlzylinders weist innenseitig verlaufende zum Zentrum führende Stege auf, um das Anschlussgewinde 41 oder ein gleichwirkendes Element aufzunehmen.

Wie die zeichnerischen Darstellungen verdeutlichen, sind die Bügel 16, 18 derart angeordnet, dass zwei Längsschenkel 20, 24 unmittelbar benachbart zueinander verlaufen und ein Schenkelpaar bilden, das entlang einer der Kanten einer Dreikantsäule bzw. eines gleichschenkligen Prismas verläuft. Entlang der weiteren Kanten erstrecken sich die verbleibenden Längsschenkel 22, 26.

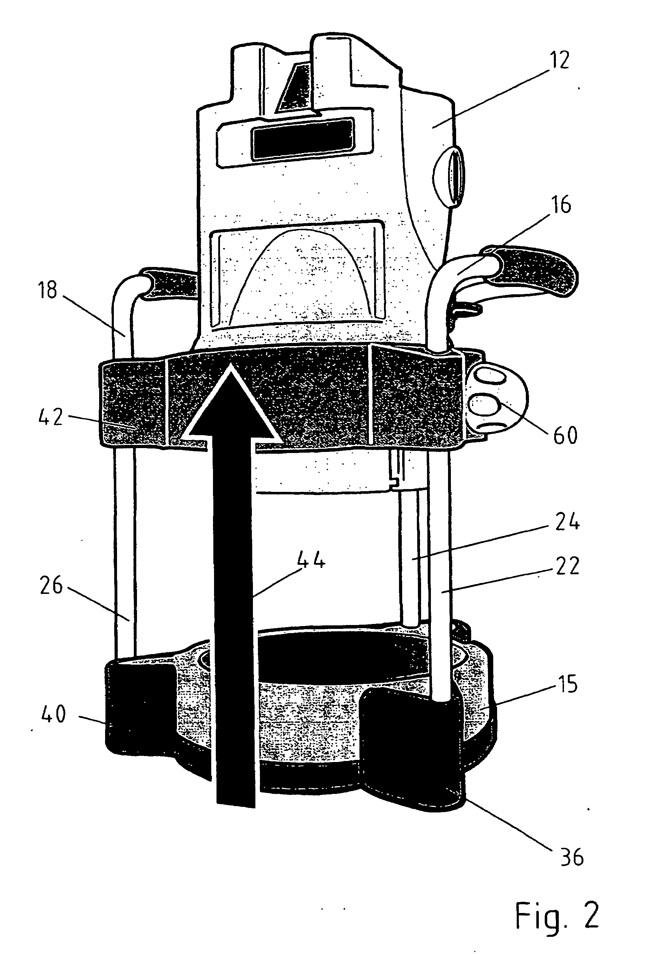

Die Längsschenkel 22, 26 bzw. das Schenkelpaar 20, 24 durchsetzen eine Halterung 42, die entsprechend der Darstellung in Fig. 2 entlang der Längsschenkel 20, 22, 24, 26 verschiebbar ist (Pfeil 44). Die Halterung 42 besteht ihrerseits aus einem eine Schale 44 bildenden äußeren Abschnitt und einem von diesem aufgenommenen einen Einsatz 46 bildenden inneren Abschnitt, der seinerseits das Gehäuse 12 des Lasers, und zwar einen Kugelabschnitt bzw. kalottenförmigen Abschnitt 48 aufnimmt. Der Außengeometrie des Abschnitts 48 des Gehäuses 12 ist der Einsatz 46 innenseitig angepaßt, so dass das Gehäuse 12 kipp- bzw. schwenkbar ist.

Um jedoch ein Drehen um dessen Längsachse zu ermöglichen, ohne dass ein Kippvorgang überlagert wird, ist vorgesehen, dass von dem Einsatz 46 nasenförmige Vorsprünge 50, 52 aufweisende streifenförmige Abschnitte 54, 56 ausgehen, die in eine umlaufende Nut 58 in dem Abschnitt 48 des Gehäuses 12 eingreifen können. Die Abschnitte 54, 56 sind Ausschnitte des Einsatzes 46 und derart federnd, dass bei Kippen des Gehäuses 12 ein Herausgleiten der nasenförmigen Vorsprünge 50, 52 aus der Nut 58 möglich ist, ohne dass eine Beschädigung erfolgt.

Mittels einer die Halterung 42 durchsetzenden Feststellschraube 60 kann das Gehäuse 12 in einer gewünschten Position fixiert werden.

Die Halterung 42 kann ihrerseits über eine Feststellschraube 62 gegenüber den Bügeln 16, 18, und zwar hinsichtlich deren unmittelbar nebeneinander verlaufenden Längsschenkeln 22, 24 festgestellt werden. Ein Fixieren erfolgt dabei vorzugsweise durch Klemmen, bei dem die Schraube 62 zu der Halterung 42 angezogen wird, wobei gleichzeitig ein außenseitig entlang der Längsschenkel 22, 24 verlaufendes Klemmelement 64 gegen diese gedrückt wird.

Die Aufnahme 14 ist - in einer Ausführungsform - nicht nur mittels des entlang des Zentrums der Grundplatte 15 verlaufenden Innengewindes 41, dessen Längsachse mit der Längsachse der Aufnahme 14 zusammenfällt, sondern mittels eines weiteren senkrecht zu dem Innengewinde 41 verlaufenden zweiten Innengewindes 66 mit z.B. einem Stativ verbindbar, so dass die Aufnahme 14 sowohl vertikal als auch horizontal ausrichtbar ist. Das zweite Innengewinde 46 oder ein gleichwirkendes Befestigungsmittel verläuft vorzugsweise in einem Fortsatz 68 der Bodenplatte 15, wobei sich der Fortsatz 68 parallel zur Längsachse der Aufnahme 14 erstreckt. Selbstverständlich bestünde auch die Möglichkeit, das zweite Innengewinde unmittelbar von der Bodenplatte 15 ausgehen zu lassen, indem die Außenwandung durchsetzt wird. Dadurch, dass die Aufnahme 14 sowohl horizontal als auch vertikal anordbar ist, kann das Gehäuse 12 sowohl vertikal als auch horizontal verstellt werden.

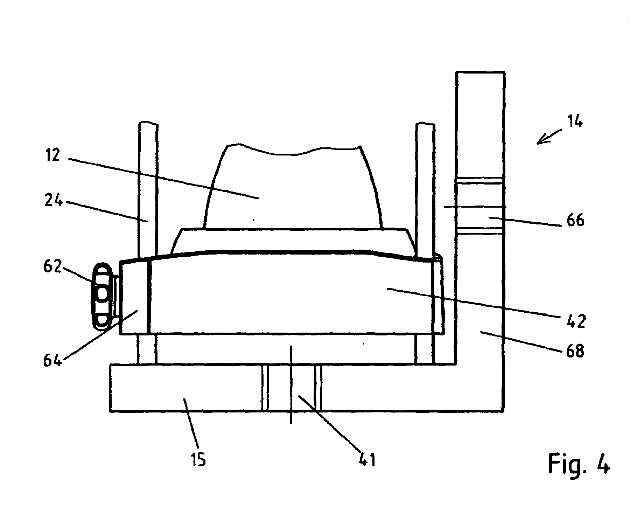

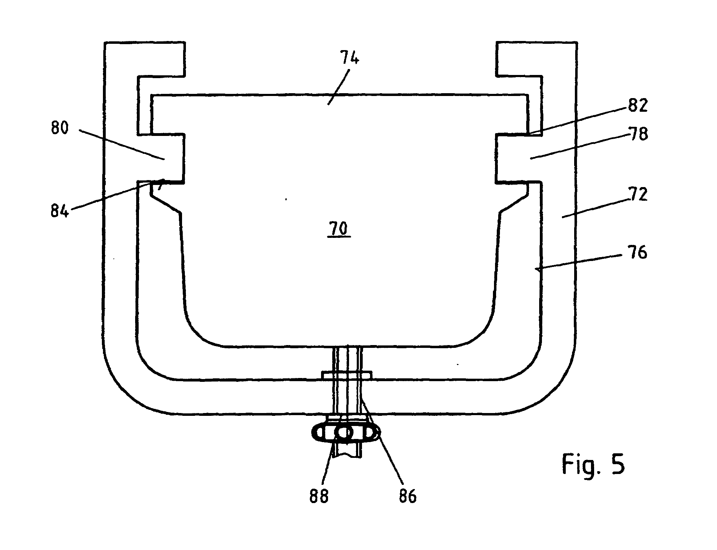

In Fig. 5 ist rein prinzipiell eine weitere Ausführungsform einer ein Gehäuse 70 eines Lasergerätes umgebenden Aufnahme 72 dargestellt. Entsprechend dem Ausführungsbeispiel der Fig. 1 und 4 umgibt auch die Aufnahme 72 nach der Fig. 5 das Gehäuse 70 in einem Umfang, das dieses gegen äußere Einwirkungen, insbesondere gegenüber Stößen oder einem Herabfallen geschützt ist. Handelt es sich bei der Aufnahme bei den Fig. 1 bis 4 um ein Gestell, dessen Bügel 16, 18 z.B. aus Stahl bestehen, so wird die Aufnahme 72 durch ein U-förmiges Profil insbesondere aus Aluminium gebildet, wodurch das Gehäuse 70 mit Ausnahme dessen das Laserlicht durchsetzenden Frontseite 74 umfangsseitig vollständig oder nahezu vollständig abgedeckt ist. Zum Längsverschieben des Gehäuses 70 entlang der Längsachse des Profilelementes bzw. der Aufnahme 72 ragen von der Innenwandung 76 des Profilelementes 72 stegartige Vorsprünge 78, 80 ab, die in entsprechend angepaßte Längsnuten 82, 84 des Gehäuses 70 des Lasers eingreifen. Zum Fixieren des Gehäuses 70 erstreckt sich in dem Profilelement bzw. der Aufnahme 72 ein Langloch 86, das von einem Befestigungselement wie Schraubenelement 88 durchsetzt und mit dem Gehäuse 70 verschraubbar ist. Somit kann ebenfalls das Gehäuse 70 gegenüber der Aufnahme 72 klemmend fixiert werden.

Anstelle eines Profils mit U-Geometrie kann selbstverständlich auch ein solches mit z.B. offenem Hohlzylinderprofil benutzt werden, um die Schutzfunktion für das Gehäuse 70 auszuüben.

Das Profilelement 72 weist des Weiteren bodenseitig zumindest ein Befestigungselement wie Innengewinde für ein Stativ auf. Auch sollen von Bodenbereich Standfüße ausgehen, die - entsprechend der Erläuterung zu Fig. 1 - mit stoßabsorbierendem Material wie Gummi ummantelt sein können. Ferner können außenseitig am Profilelement 72 Stoßdämpfer wie Gummieelemente vorgesehen sein.

Alternativ zu der in Fig. 5 dargestellten Ausführungsform könnte in einer Abwandlung auf die Stege 78 und 80 verzichtet werden. Das Klemmelement wird als Kugelabschnitt ausgeführt und so Klemmung und Neigungsverstellung in einem System kombiniert, wobei die Klemmung von Höhenverstellung bzw. Neigungsverstellung getrennt erfolgen könnte.

## Patentansprüche

1. Lasergerät (10) wie Baulasergerät mit innerhalb eines Gehäuses (12, 70) angeordneter Lichtquelle,
**dadurch gekennzeichnet,**
**dass** das Gehäuse (12, 70) von einer Aufnahme (14, 72) umgeben ist, entlang der das Gehäuse des Lasers verstellbar angeordnet ist.

2. Lasergerät nach Anspruch 1,
**dadurch gekennzeichnet,**
**dass** die Aufnahme (14) eine Grundplatte (15) mit einer Befestigung wie erstes Anschluss- oder Innengewinde für eine Abstützung wie Stativ aufweist.

3. Lasergerät nach Anspruch 1 oder 2,
**dadurch gekennzeichnet,**
**dass** das Gehäuse (12) in einer insbesondere plattenförmigen Halterung (42) vorzugsweise kipp- bzw. schwenkbar gelagert ist, die entlang der Aufnahme (14) verstellbar ist, wobei vorzugsweise das Gehäuse mit einem bodenseitig zumindest teilweise kugelabschnitt- bzw. kalottenförmig ausgebildeten Abschnitt (48) in einer angepaßten Aussparung der Halterung gelagert ist.

4. Lasergerät nach zumindest einem der vorhergehenden Ansprüche,
**dadurch gekennzeichnet,**
**dass** die Aufnahme (14) von der Grundplatte (15) ausgehende Stäbe oder zumindest einen, vorzugsweise zwei Bügel (16, 18) umfasst, von denen insbesondere einer als Handgriff ausgebildet ist.

5. Lasergerät nach zumindest einem der vorhergehenden Ansprüche,
**dadurch gekennzeichnet,**
**dass** der Bügel (16, 18) eine U-förmige Geometrie mit von der Grundplatte (15) ausgehenden Seiten- oder Längsschenkeln (20, 22, 24, 26) und einen einem Kreisbogen folgenden Querschenkel (28, 30) aufweist, wobei vorzugsweise zumindest der Querschenkel (28, 30) mit einem Stoßdämpfungselement wie Gummielement umgeben ist oder dieses aufweist.

6. Lasergerät nach zumindest einem der vorhergehenden Ansprüche,
**dadurch gekennzeichnet,**
**dass** die Halterung (42) für das Gehäuse (12) entlang der Stäbe bzw. der Längsschenkel (20, 22, 24, 26) geführt verschiebbar und gegenüber diesen fixierbar ist.

7. Lasergerät nach zumindest einem der vorhergehenden Ansprüche,
**dadurch gekennzeichnet,**
**dass** von der Grundplatte (15) Standfüße der Aufnahme (14) und/oder Dämpfungselemente wie Gummielemente (36, 38) ausgehen, die gegebenenfalls die Standfüße umgeben, wobei die Dämpfungselemente im Fußbereich der Stäbe bzw. Längsschenkel (20, 22, 24, 26) angeordnet sind und wobei insbesondere die Längsschenkel in Verlängerung der Standfüße verlaufen.

8. Lasergerät nach zumindest einem der vorhergehenden Ansprüche,
**dadurch gekennzeichnet,**
**dass** von der Grundplatte (15) zwei Bügel (16, 18) ausgehen, wobei ein Längsschenkel (20) des einen Bügels (16) unmittelbar benachbart zu einem Längsschenkel (24) des anderen Bügels (18) verläuft, wobei insbesondere die benachbarten ein Schenkelpaar bildenden Längsschenkel (20, 24) sowie die weiteren Längsschenkel (22, 26) entlang Kanten einer Dreikantsäule, insbesondere eines gleichschenkligen Prismas verlaufen.

9. Lasergerät nach zumindest einem der vorhergehenden Ansprüche,
**dadurch gekennzeichnet,**
**dass** die Aufnahme umfangsseitig eine Zylinderfläche mit diese überragenden als Dämpfungselemente (36, 38, 40) ausgebildeten Vorsprüngen aufspannt.

10. Lasergerät nach zumindest einem der vorhergehenden Ansprüche,
**dadurch gekennzeichnet,**
**dass** die Halterung (42) für das Gehäuse (12) mittels eines Feststellelementes wie Schraubenelement (62) gegenüber dem Schenkelpaar (20, 24) vorzugsweise klemmend fixierbar ist.

11. Lasergerät nach zumindest einem der vorhergehenden Ansprüche,
**dadurch gekennzeichnet,**
**dass** die Halterung (42) aus einer hohlzylinderförmigen Schale als äußerer Abschnitt (44) und einem das Gehäuse (12) aufnehmenden Einsatz (46) als innerer Abschnitt besteht, wobei vorzugsweise der Einsatz in Richtung des Gehäuses sich erstreckende Vorsprünge (50, 52) zum Eingreifen in eine vorzugsweise umlaufende Vertiefung wie Nut (58) des kugelabschnitt- bzw. kalottenförmig ausgebildeten Abschnitts (48) des Gehäuses (12) aufweist.

12. Lasergerät nach zumindest einem der vorhergehenden Ansprüche,
**dadurch gekennzeichnet,**
**dass** die Vorsprünge (50, 52) von sich entlang Längsachsenrichtung der Aufnahme (14) erstreckenden steg oder streifenförmigen insbesondere als Ausschnitte ausgebitdeten Abschnitten (54, 56) des Einsatzes (46) abragen.

13. Lasergerät nach zumindest einem der vorhergehenden Ansprüche,
**dadurch gekennzeichnet,**
**dass** von der insbesondere hohlzylinderförmig bzw. kreisscheibenförmig ausgebildeten Grundplatte (15) zwei Befestigungen (41, 66) in Form von Anschluss- bzw. Innengewinden (41, 66) für eine Abstützung wie Stativ ausgehen, von denen eine erste Befestigung (41) parallel zur Verstellrichtung des Gehäuses (12) und die andere zweite Befestigung (66) senkrecht zu dieser verläuft, wobei insbesondere die erste Befestigung wie Anschluss- bzw, Innengewinde (41) von einem Bodenabschnitt der Grundplatte (15) ausgeht und von der Längsachse der Aufnahme (14) durchsetzt ist, die bei ungekipptem Gehäuse (12) mit dessen Längsachse zusammenfällt oder nahezu zusammenfällt, und/oder die zweite Befestigung wie Anschluss- bzw. Innengewinde (66) insbesondere in einem von der Grundplatte (15) ausgehenden Fortsatz (68) verläuft.

14. Lasergerät nach zumindest einem der vorhergehenden Ansprüche,
**dadurch gekennzeichnet,**
**dass** die Aufnahme (72) ein das Gehäuse (70) des Lasergerätes teilweise umgebendes Geometrie eines U-Profils wie U-förmiges Aluminiumprofilelement, das einen das Gehäuse (70) dreiseitig umgebenden Querschnitt aufweist, oder Geometrie eines umfangsseitig offenen Hohlzylinderabschnitts aufweisendes Element ist.

15. Lasergerät nach zumindest einem der vorhergehenden Ansprüche,
**dadurch gekennzeichnet,**
**dass** das Profilelement als die Aufnahme (72) ein in Längsrichtung verlaufendes Langloch aufweist, das von einem Feststellelement (88) für das Gehäuse (70) durchsetzt ist.

16. Lasergerät nach zumindest einem der vorhergehenden Ansprüche,
**dadurch gekennzeichnet,**
**dass** von der Innenwandung des Profilelementes Fnhrungen für das Gehäuse (70) ausgehen, wobei insbesondere die Führung als stegförmiger Vorsprung (78, 80) ausgebildet ist, der in eine entsprechend angepasste Aussparung (82, 84) des Gehäuses (70) eingreift.

17. Lasergerät nach zumindest einem der vorhergehenden Ansprüche,
**dadurch gekennzeichnet,**
**dass** die Aufnahme (14, 72) das Gehäuse (12, 70) zumindest bereichsweise koaxial oder in etwa koaxial umgibt.

## Claims

1. Laser apparatus (10) such as a construction laser apparatus comprising a light source accommodated inside a housing (12, 70),
**characterized in**
**that** the housing (12, 70) is surrounded by a receiving means (14, 72), along which said housing of the laser is arranged in an adjustable manner.

2. Laser apparatus according to claim 1,
**characterized in**
**that** the receiving means (14) comprises a base plate (15) with a mounting element such as first connecting or internal thread for a support such as stand.

3. Laser apparatus according to claim 1 or 2,
**characterized in**
**that** the housing (12) is supported preferably in tilting or pivotable manner in a particularly plate-shaped support (42), which can be adjusted along the receiving means (14), where preferably the housing is supported in an appropriately adapted cutout of the support with a bottom-side section (48) being at least partially spherical or cap-shaped.

4. Laser apparatus according to at least one of the previous claims,
**characterized in**
**that** the receiving means (14) comprises rods or at least one bracket, preferably two brackets (16, 18), extending from the base plate (15), particularly one of the brackets is a handle.

5. Laser apparatus according to at least one of the previous claims,
**characterized in**
**that** the bracket (16, 18) has the geometric configuration of a U with lateral or longitudinal legs (20, 22, 24, 26) extending from the base plate (15) and a transverse leg (28, 30) following a circular arc, where preferably at least the transverse leg (28, 30) is surrounded by or comprises a shock-cushioning element such as rubber element.

6. Laser apparatus according to at least one of the previous claims,
**characterized in**
**that** the support (42) for the housing (12) can be guided to move along the rods or longitudinal legs (20, 22, 24, 26) and can be fixed in position relative to the them.

7. Laser apparatus according to at least one of the previous claims,
**characterized in**
**that** from the base plate (15) support feet of the receiving means (14) and/or cushioning elements such as rubber elements (36, 38) extend, that possibly surround the support feet, where the cushioning elements are arranged in the foot area of the rods or longitudinal legs (20, 22, 24, 26) and where particularly the longitudinal legs extend in extension of the support feet.

8. Laser apparatus according to at least one of the previous claims,
**characterized in**
**that** from the base plate (15) two brackets (16, 18) extend, where one longitudinal leg (20) of the one bracket (16) extends directly adjacent to one longitudinal leg (24) of the other bracket (18), where particularly the adjacent longitudinal legs (20, 24) forming a pair of legs, as well as the further longitudinal legs (22, 26) extend along edges of a three-square column, particularly of an isosceles prism.

9. Laser apparatus according to at least one of the previous claims,
**characterized in**
**that** the receiving means creates peripherally a cylindrical surface with projections configured as cushioning elements (36, 38, 40) that projects over said cylindrical surface.

10. Laser apparatus according to at least one of the previous claims,
**characterized in**
**that** the support (42) for the housing (12) can be fixed in position preferably in clamming manner relative to the pair of legs (20, 24) by means of a locking element such as screw element (62).

11. Laser apparatus according to at least one of the previous claims,
**characterized in**
**that** the support (42) consists of a shell having the form of a hollow cylinder representing the external section (44), and of an insert (46) accommodating the housing (12) representing the internal section, where preferably the insert comprises projections (50, 52) which extend in the direction of the housing to come into engagement with a preferably peripheral recess such as groove (58) of the spherical or cap-shaped section (48) of the housing (12).

12. Laser apparatus according to at least one of the previous claims,
**characterized in**
**that** the projections (50, 52) protrude from sections (54, 56) of the insert (46), said sections extend along the direction of the longitudinal axis of the receiving means (14), are stud-shaped or strip-shaped and are particularly formed as cutouts.

13. Laser apparatus according to at least one of the previous claims,
**characterized in**
**that** from the base plate (15) being configured particularly as a hollow cylinder or as a circular disk two mounting elements (41, 66) in the form of connecting or internal threads (41, 66) for a support such as stand extend, a first mounting element (41) of which extends parallel to the adjustment direction of the housing (12) and the other second mounting element (66) extends perpendicular to said adjustment direction, where particularly the first mounting element such as connecting or internal thread (41) extends from a base section of the base plate (15) and is passed through from the longitudinal axis of the receiving means (14), whereby the longitudinal axis of said receiving means coincides or almost coincides with the longitudinal axis of the housing (12) when said housing is tilted, and/or the second mounting element such as connecting or internal thread (66) particularly extends in an extension (68) extending from the base plate (15).

14. Laser apparatus according to at least one of the previous claims,
**characterized in**
**that** the receiving means (72) is an element which partially surrounds the housing (70) of the laser apparatus, said receiving means has the geometric configuration of a U as U-shaped aluminum structural element having a cross section surrounding the housing (70) on three sides, or has the geometric configuration of a peripherally open section of a hollow cylinder.

15. Laser apparatus according to at least one of the previous claims,
**characterized in**
**that** the profile element as the receiving means (72) has a longitudinal hole extending in longitudinal direction, which is passed through from a locking element (88) for the housing (70).

16. Laser apparatus according to at least one of the previous claims,
**characterized in**
**that** guides for the housing (70) extend from the internal wall of the profile element, where particularly the guide is configured as a stud-shaped projection (78, 80) engaging into appropriately adapted cutouts (82, 84) of the housing (70).

17. Laser apparatus according to at least one of the previous claims,
**characterized in**
**that** the receiving means (14, 72) surrounds the housing (12, 70) at least in some areas coaxially or approximately coaxially.

## Revendications

1. Appareil laser (10), par exemple appareil laser pour la construction, comprenant une source lumineuse disposée à l'intérieur d'un boîtier (12, 70),
**caractérisé en ce que**
le boîtier (12, 70) est entouré par un logement (14, 72) le long duquel on peut régler le boîtier du laser.

2. Appareil laser selon la revendication 1,
**caractérisé en ce que**
le logement (14) présente une plaque de base (15) comprenant une fixation ainsi qu'un premier filetage de raccordement ou filetage intérieur pour un étai, par exemple un pied.

3. Appareil laser selon la revendication 1 ou 2,
**caractérisé en ce que**
le boîtier (12) est logé de préférence de façon pivotante ou basculante dans un support (42) notamment en forme de plaque mobile le long du logement (14), le boîtier présentant de préférence une section (48) configurée du côté du fond au moins partiellement en forme de partie de sphère ou de calotte, qui se loge dans un évidement approprié du support.

4. Appareil laser selon au moins l'une des revendications précédentes,
**caractérisé en ce que**
le logement (14) comprend des barres partant de la plaque de base (15) ou au moins une, de préférence deux, anses (16, 18), dont une en particulier est en forme de poignée.

5. Appareil laser selon au moins l'une des revendications précédentes,
**caractérisé en ce que**
les anses (16, 18) présentent une géométrie en forme de U avec des branches latérales ou longitudinales (20, 22, 24, 26) partant de la plaque de base (15) et une branche transversale (28, 30) décrivant un arc de cercle, de préférence au moins la branche transversale (28, 30) étant entourée par ou présentant un élément d'amortissement de chocs, par exemple un élément en caoutchouc.

6. Appareil laser selon au moins l'une des revendications précédentes,
**caractérisé en ce que**
le support (42) pour le boîtier (12) est guidé de façon mobile le long des barres ou des branches longitudinales (20, 22, 24, 26) et peut être fixé par rapport à celles-ci.

7. Appareil laser selon au moins l'une des revendications précédentes,
**caractérisé en ce qu'**
à partir de la plaque de base (15) partent des pieds d'appui du logement (14) et/ou des éléments d'amortissement tels que des éléments en caoutchouc (36, 38) qui entourent également les pieds d'appui, les éléments d'amortissement étant disposés dans la zone inférieure des barres ou des branches longitudinales (20, 22, 24, 26), et les branches longitudinales s'étendent en particulier dans le prolongement des pieds d'appui.

8. Appareil laser selon au moins l'une des revendications précédentes,
**caractérisé en ce qu'**
à partir de la plaque de base (15) partent deux anses (16, 18), une branche longitudinale (20) de la première anse (16) s'étendant immédiatement à côté d'une branche longitudinale (24) de l'autre anse (18), et les branches longitudinales (20, 24) adjacentes, qui forment une paire de branches, ainsi que les autres branches longitudinales (22, 26), s'étendent en particulier le long des arêtes d'une colonne triangulaire, en particulier un prisme équilatéral.

9. Appareil laser selon au moins l'une des revendications précédentes,
**caractérisé en ce que**
le logement présente à la périphérie une surface cylindrique comprenant des saillies configurées sous forme d'éléments d'amortissement (36, 38, 40).

10. Appareil laser selon au moins l'une des revendications précédentes,
**caractérisé en ce que**
le support (42) pour le boîtier (12) peut être fixé, de préférence par serrage, au moyen d'un élément de fixation, par exemple un élément de vissage (62), par rapport à la paire de branches (20, 24).

11. Appareil laser selon au moins l'une des revendications précédentes,
**caractérisé en ce que**
le support (42) se compose d'une coquille en forme de cylindre creux en tant que section extérieure (44) et d'un insert (46) recevant le boîtier (12) en tant que section intérieure, l'insert présentant de préférence des saillies (50, 52) qui s'étendent en direction du boîtier et qui s'accrochent dans un renfoncement de préférence périphérique, par exemple une rainure (58), de la section (48) en forme de partie de sphère ou de calotte du boîtier (12).

12. Appareil laser selon au moins l'une des revendications précédentes,
**caractérisé en ce que**
les saillies (50, 52) partent de sections (54, 56) de l'insert (46) configurées en forme de traverses ou de bandes en particulier en tant que découpes, qui s'étendent le long de la direction axiale longitudinale du logement (14).

13. Appareil laser selon au moins l'une des revendications précédentes,
**caractérisé en ce qu'**
à partir de la plaque de base (15), en particulier configurée sous forme de cylindre creux ou de disque circulaire, partent deux fixations (41, 66) sous forme de filetages de raccordement ou de filetages intérieurs (41, 66) destinées à un étai, par exemple un pied, et dont une première fixation (41) s'étend parallèlement à la direction de déplacement du boîtier (12) tandis que l'autre fixation (66) s'étend perpendiculairement à celle-ci, et la première fixation, par exemple un filetage de raccordement ou un filetage intérieur (41), part en particulier d'une section de fond de la plaque de base (15) en étant traversée par l'axe longitudinal du logement (14) qui, lorsque le boîtier (12) n'est pas basculé, coïncide avec son axe longitudinal ou coïncide approximativement avec son axe longitudinal, et/ou la deuxième fixation, par exemple un filetage de raccordement ou un filetage intérieur (66), s'étend en particulier dans un appendice (68) partant de la plaque de base (15).

14. Appareil laser selon au moins l'une des revendications précédentes,
**caractérisé en ce que**
le logement (72) présente la géométrie d'un profilé en U, par exemple un élément profilé en aluminium en forme de U, entourant partiellement le boîtier (70) de l'appareil laser et présentant une section transversale entourant le boîtier (70) sur trois côtés, ou la géométrie d'un élément présentant une section transversale en forme de cylindre creux ouvert sur la périphérie.

15. Appareil laser selon au moins l'une des revendications précédentes,
**caractérisé en ce que**
l'élément profilé formant le logement (72) présente un trou oblong s'étendant en direction longitudinale, traversé par un élément de fixation (88) pour le boîtier (70).

16. Appareil laser selon au moins l'une des revendications précédentes,
**caractérisé en ce qu'**
à partir de la paroi intérieure de l'élément profilé partent des guides pour le boîtier (70), en particulier des saillies en forme de traverse (78, 80) qui pénètrent dans un évidement correspondant (82, 84) du boîtier (70).

17. Appareil laser selon au moins l'une des revendications précédentes,
**caractérisé en ce que**
le logement (14, 72) entoure le boîtier (12, 70) de façon coaxiale ou approximativement coaxiale au moins dans certaines zones.
